Europäisches Patentamt

European Patent Office

Office européen des brevets

(19)

(11) Veröffentlichungsnummer: **0 273 859**
**A2**

(12) **EUROPÄISCHE PATENTANMELDUNG**

(21) Anmeldenummer: 87810680.6

(22) Anmeldetag: 20.11.87

(51) Int. Cl.⁴: **B 65 B 23/12**
**B 65 G 47/71**

(30) Priorität: 23.12.86 CH 5192/86

(43) Veröffentlichungstag der Anmeldung:
06.07.88 Patentblatt 88/27

(84) Benannte Vertragsstaaten: **DE FR GB IT NL**

(71) Anmelder: **SIG Schweizerische Industrie-Gesellschaft**
**CH-8212 Neuhausen am Rheinfall (CH)**

(72) Erfinder: **Löw, Martin**
**Hanenbüelstrasse 310**
**CH-8214 Gächlingen (CH)**

(74) Vertreter: **White, William et al**
**PATENTANWALTS-BUREAU ISLER AG Postfach 6940**
**Walchestrasse 23**
**CH-8023 Zürich (CH)**

(54) Vorrichtung zum Verteilen scheibenförmiger Produkte.

(57) Der Vorrichtung werden die Produkte (1), insbesondere Biscuits, in mehreren durch Führungsbleche (2) geführten Eintrittskolonnen (3) durch ein Förderband (9) zugeführt. Stromabwärts des Förderbandes (9) ist bei mehreren der Eintrittskolonnen (3) je eine geneigte, ebene, zwischen zwei Stellungen schwenkbare Wippe (11) angeordnet. Je nach Stellung der Wippe gleitet das Produkt (1) in eine von je zwei Austrittskolonnen (6). Jede Wippe (11) hat einen eigenen Stellmotor, der separat durch je einen zugeordneten Fühler gesteuert ist. Beim Durchlauf des Produktes in der entsprechenden Kolonne (3) liefert der Fühler ein Signal, das die Wippe (11) in die jeweils andere Stellung umsteuert. Damit können die Produkte (1) mehrerer Eintrittskolonnen in eine unterschiedliche Anzahl von Austrittskolonnen verteilt werden, ohne dass eine aufwendige Einrichtung zum reihenweisen Ausrichten und Synchronisieren der Produkte in den verschiedenen Kolonnen nötig ist.

Fig. 4

EP 0 273 859 A2

Bundesdruckerei Berlin

## Beschreibung

### Vorrichtung zum Verteilen scheibenförmiger Produkte

Aus der GB-PS 1 282 328 ist eine Vorrichtung gemäss Oberbegriff des Anspruchs 1 bekannt. Bei dieser bekannten Vorrichtung wird eine Anzahl von Eintrittskolonnen ankommender Biscuits auf eine grössere Anzahl von Austrittskolonnen verteilt. Jeder Eintrittskolonne ist eine geneigte, flache, um eine parallel zur Förderrichtung angeordnete Achse schwenkbare Wippe zugeordnet. Alle Wippen sind über Kurvenscheiben durch einen gemeinsamen Antrieb gesteuert. Bei dieser Vorrichtung ist es zwingend erforderlich, dass in sämtlichen Kolonnen die Biscuits zur gleichen Zeit auf die Wippen gelangen. Ausserdem muss die Bewegung der Wippen mit der Biscuitzufuhr synchronisiert sein. Dies setzt einen komplizierten Ausricht- und Synchronisiermechanismus voraus, der relativ störanfällig ist.

Der vorliegenden Erfindung liegt die Aufgabe zugrunde, eine Vorrichtung gemäss Oberbegriff des Anspruchs 1 derart weiterzubilden, dass die Ausrichtung der Biscuits in gleichzeitig an den Wippen eintreffende Reihen nicht erforderlich ist. Diese Aufgabe wird durch die kennzeichnenden Merkmale des Anspruchs 1 gelöst.

Aus der CH-PS 607'967 ist eine Gruppiervorrichtung bekannt mit einer einzelnen Zuführkolonne für verpackte Schokoladeriegel. Ueber der Zuführkolonne ist ein Fühler angeordnet, der über einen Zähler eine Weiche zum Weiterleiten der Produkte in eine von zwei Austrittskolonnen steuert. Damit können in den Austrittskolonnen abgezählte Gruppen von Schokoladeriegeln gebildet werden. Die Gruppen werden einer Verpackungsmaschine zugeführt.

Nachfolgend werden Ausführungsbeispiele der Erfindung anhand der Zeichnung erläutert. Darin zeigt:

Fig. 1 eine Seitenansicht einer Verteilvorrichtung,

Fig. 2 die Draufsicht auf die Vorrichtung nach Fig. 1,

Fig. 3 den Schnitt längs der Linie III - III in Fig. 2 in vergrössertem Massstab,

Fig. 4 die Ansicht in Richtung IV in Fig. 3,

Fig. 5 den Schnitt längs der Linie V - V in Fig. 3,

Fig. 6 eine Draufsicht auf einen Teil einer zweiten Ausführungsform,

Fig. 7 die Ansicht VII in Fig. 6, und

Fig. 8 ein Schaltschema für die Steuerung der Wippe.

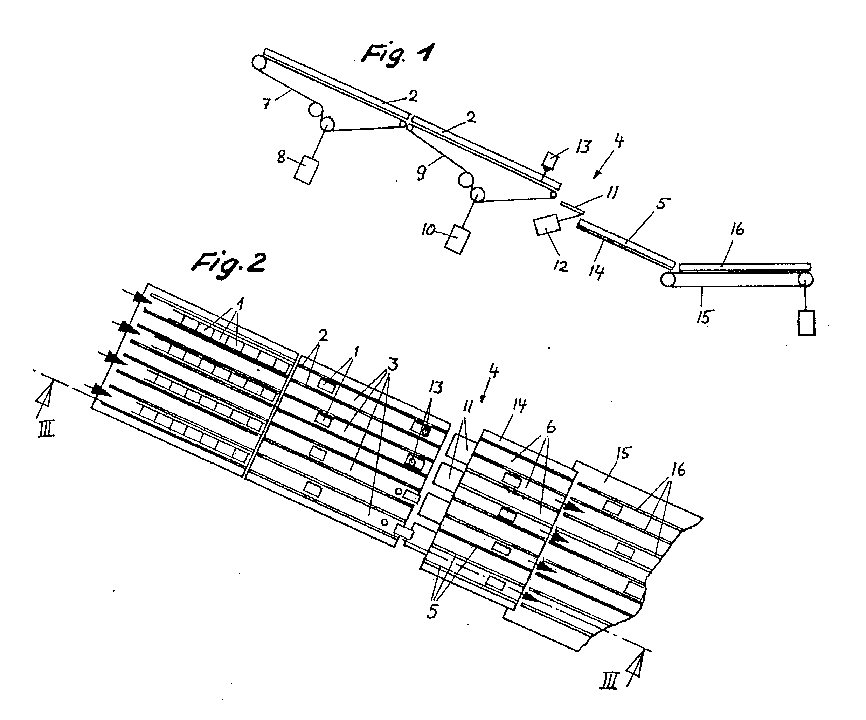

Wie in Fig. 1 und 2 dargestellt ist, werden flache, rechteckige Biscuits 1 in vier durch Führungsbleche 2 geführte Eintrittskolonnen 3 einer Verteileinrichtung 4 zugeführt und von dieser auf acht durch weitere Führungsbleche 5 geführte Austrittskolonnen 6 verteilt. Die Fördermittel zur Zufuhr der Biscuits bestehen aus einem stromaufwärtigen Förderband 7 mit einem Antriebsmotor 8 und einem stromabwärtigen, rascher laufenden Förderband 9 mit einem separaten Antriebsmotor 10. Dadurch werden die Biscuits 1 in den Kolonnen 3 zuverlässig vereinzelt. Die Verteileinrichtung 4 besteht aus vier zwischen zwei Endstellungen schwenkbaren, geneigten, ebenen Wippen 11, von denen je eine stromabwärts der Eintrittskolonnen 3 angeordnet ist. Jede Wippe 11 hat einen eigenen Stellmotor 12. Stromaufwärts jeder Wippe 11 ist je ein Fühler in Form einer Reflex-Lichtschranke 13 angeordnet. Beim Durchlauf eines Biscuits 1 unter der Lichtschranke 13 gibt die Lichtschranke 13 ein Signal ab, das die zugehörige Wippe 11 steuert. Die Austrittskolonnen 6 gleiten zunächst auf einem geneigten Blech 14 und werden von diesem einem horizontalen Förderband 15 mit weiteren Führungsblechen 16 übergeben, von dem sie z.B. einer Anzahl von Verpackungsmaschinen zugeführt werden.

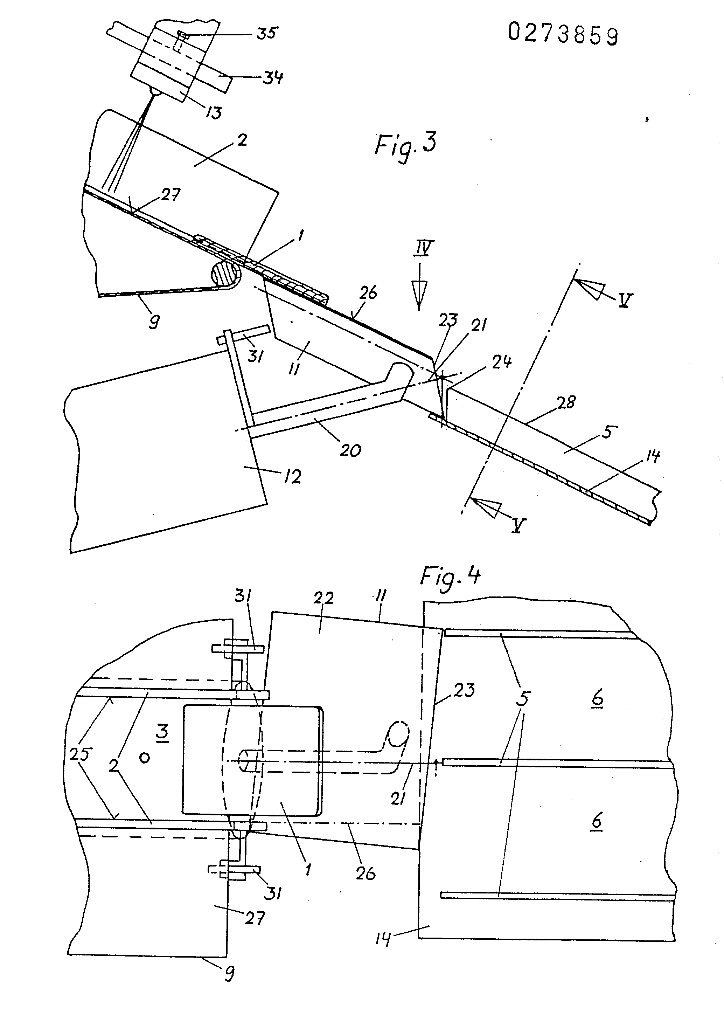

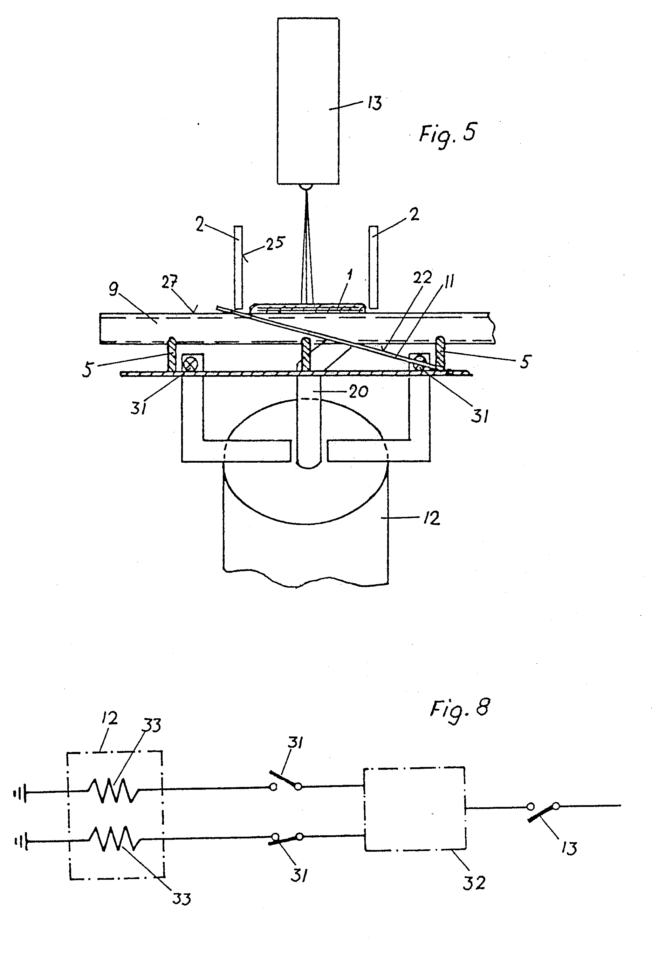

In den Fig. 3 bis 5 ist die Verteileinrichtung 4 im vergrösserten Massstab dargestellt. Die Wippe 11 ist eine ebene Platte, die starr mit der geneigt zur Plattenebene angeordneten Antriebswelle 20 des Stellmotors 12 verbunden ist. Die Wellenachse 21 durchdringt die Ebene der Wippenoberseite 22 benachbart dem stromabwärtigen Rand 23 der Wippe 11 und benachbart der oberen Ecke 24 eines der Führungsbleche 5. In der Vertikalprojektion (Fig. 4) sind die Wellenachse 21 und das eine Führungsblech 5 parallel und symmetrisch zu zwei Führungsblechen 2 einer Eintrittskolonne 3 angeordnet. In beiden Endstellungen der Wippe 11 schneidet die Vertikalebene längs der Innenseite 25 des einen Führungsbleches 2, die Wippenoberseite 22 längs einer Linie 26, die etwa parallel zur Förderrichtung des Förderbandes 9 verläuft und gleich hoch oder etwas tiefer liegt als die Ebene der Oberseite 27 des Förderbandes 9. Die Wippenoberseite 22 liegt oberhalb der verlängerten Oberkante 28 des Führungsbleches 5.

Durch die beschriebene Ausbildung der Verteileinrichtung 4 wird erreicht, dass rechteckige Biscuits mit ihren Längskanten parallel zur Förderrichtung über die Wippe 11 rutschen und unverkantet lagerichtig zwischen die Führungsbleche 5 gelangen. Die zur Wippenebene geneigte Schwenkachse ergibt kleine Massenträgheitsmomente und ermöglicht eine einfache Lagerung und Kraftübertragung.

Als Stellmotor 12 eignet sich z.B. ein unter der Bezeichnung ACR 071 B von Contraves AG in Zürich erhältlicher Servomotor. In diesem Fall sind dem Servomotor zwei Endschalter 31 zugeordnet, welche die beiden Endstellungen der Wippe 11 festlegen. In Fig. 8 ist ein Schaltschema für diesen Stellmotor dargestellt. Das Signal der als Schalter angedeuteten Lichtschranke 13 ist einer Kippstufe 32 zugeführt. Bei jedem Impuls der Lichtschranke 13 kippt die Kippstufe 32 in ihre jeweils andere Stellung und speist über jeweils den einen Endschalter 31 die eine von zwei Magnetspulen 33 des Stellmotors 12 für Vor- bzw. Rückwärtslauf, bis der zugehörige Endschalter 31 beim Erreichen der Endstellung der Wippe 11 den Strom unterbricht. Um sicherzustellen, dass die Wippe 11 umgeschaltet ist, bevor das ankommende Biscuit 1 auf sie gleitet, ist die Lichtschranke 13 auf einem Träger 34 in Förderrichtung verschiebbar und durch eine Schraube 35 arretierbar.

Durch diese Ausbildung der Steuerung werden die Biscuits in jeder Eintrittskolonne 3 gleichmässig auf zwei Austrittskolonnen 6 aufgeteilt, ohne dass für die verschiedenen Kolonnen Ausricht- und Synchronisationsmittel erforderlich sind.

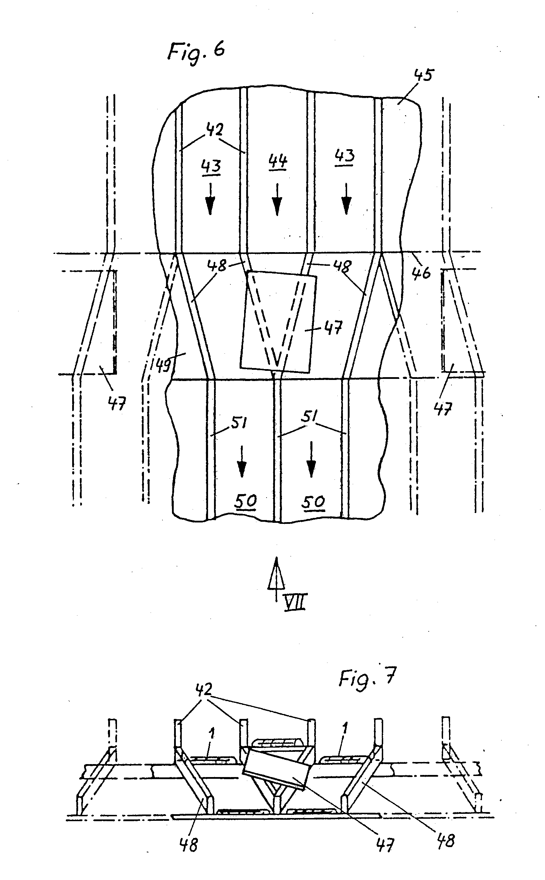

Die erfindungsgemässe Ausbildung der Verteileinrichtung 4 kann auch zur Kolonnenreduktion verwendet werden. Eine solche Variante ist in Fig. 6 und 7 ausschnittweise schematisch dargestellt. Eine Vielzahl von durch Führungsbleche 42 geführte Eintrittskolonnen ist in Gruppen von jeweils drei Kolonnen 43, 44 aufgeteilt. Das Fördermittel ist hier nicht ein Förderband, sondern eine geneigte Platte 45, auf welcher die Biscuits gleiten. In der mittleren Kolonne 44 ist die Platte 45 am stromabwärtigen Ende 46 höher als in den beiden äusseren Kolonnen 43. Der mittleren Kolonne 44 ist eine Wippe 47 zugeordnet, die gleich ausgebildet und gesteuert ist wie die Wippe 11 gemäss Fig. 1 bis 5. Die Biscuits in den beiden äusseren Kolonnen 43 werden durch Führungsbleche 48 auf einer geneigten Platte 49 direkt in die beiden durch Führungsbleche 51 geführten Austrittskolonnen 50 geleitet. Die Biscuits der mittleren Kolonne 44 werden durch die Wippe 47 gleichmässig auf die beiden Austrittskolonnen 50 verteilt.

**Patentansprüche**

1. Vorrichtung zum Verteilen von durch ein Fördermittel (9,45) in mehreren Eintrittskolonnen (3,43,44) angelieferten, durch erste Führungsmittel (2,42) geführten, flach liegenden, scheibenförmigen Produkten (1), insbesondere Biscuits, auf eine unterschiedliche Anzahl von in zweiten Führungsmitteln (5,51) geführten Austrittskolonnen (6,50), umfassend mehrere je einer der Eintrittskolonnen (3,44) zugeordnete, in zwei Endstellungen schwenkbare, geneigte Wippen (11,47), dadurch gekennzeichnet, dass jeder Wippe (11, 47) ein eigener Fühler (13) zugeordnet ist, der beim Durchlauf eines Produktes (1) ein Signal abgibt, und dass jede Wippe (11,47) einen eigenen, durch den zugeordneten Fühler (13) gesteuerten Stellmotor (12) aufweist.

2. Vorrichtung nach Anspruch 1, dadurch gekennzeichnet, dass der Fühler (13) stromaufwärts der Wippe (11,47) angeordnet ist.

3. Vorrichtung nach Anspruch 1 oder 2, dadurch gekennzeichnet, dass der Fühler (13) in Förderrichtung verstellbar ist.

4. Vorrichtung nach einem der Ansprüche 1 bis 3, dadurch gekennzeichnet, dass der Fühler (13) eine Lichtschranke ist.

5. Vorrichtung nach einem der Ansprüche 1 bis 4, dadurch gekennzeichnet, dass stromaufwärts des ersten Fördermittels (9) ein zweites Fördermittel (7) angeordnet ist, dessen Transportgeschwindigkeit geringer ist als jene des ersten Fördermittels (9).

6. Vorrichtung nach einem der Ansprüche 1 bis 5, dadurch gekennzeichnet, dass der Grundriss der Schwenkachse (21) der Wippe (11) parallel zu den ersten Führungsmitteln (2) der zugehörigen Eintrittskolonne (3) ist, und dass die Schwenkachse (21) die Wippenfläche (22) im Bereich des stromabwärtigen Endes (23) der Wippe (11) schneidet.

7. Vorrichtung nach einem der Ansprüche 1 bis 6, dadurch gekennzeichnet, dass der Vertikalschnitt längs der einen Führungsmittelinnenseite (25) der ersten Führungsmittel (2) durch die Wippenfläche (22) in der einen Wippenstellung eine Linie (26) definiert, die annähernd parallel zur Förderrichtung und höchstens auf dem Niveau der Oberfläche (27) des ersten Fördermittels (9) ist.

**Fig. 1**

**Fig. 2**

0273859

0273859

Fig. 3

Fig. 4

0273859

Fig. 5

Fig. 8

Fig. 6

Fig. 7